(19) **Europäisches Patentamt European Patent Office Office européen des brevets**

(11) **EP 4 394 484 B1**

(12) **FASCICULE DE BREVET EUROPEEN**

(45) Date de publication et mention de la délivrance du brevet:
**17.09.2025 Bulletin 2025/38**

(21) Numéro de dépôt: **23220427.1**

(22) Date de dépôt: **28.12.2023**

(51) Classification Internationale des Brevets (IPC):
*G02B 27/01* *(2006.01)*

(52) Classification Coopérative des Brevets (CPC):
**G02B 27/0172;** G02B 2027/0145; G02B 2027/0174; G02B 2027/0187

(54) **DISPOSITIF DE PROJECTION D'UNE IMAGE FORMÉE PAR UN ÉCRAN**

VORRICHTUNG ZUM PROJIZIEREN EINES BILDES, DAS VON EINEM BILDSCHIRM GEBILDET WIRD

DEVICE FOR PROJECTING AN IMAGE FORMED BY A SCREEN

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.12.2022 FR 2214636**

(43) Date de publication de la demande:
**03.07.2024 Bulletin 2024/27**

(73) Titulaire: **Commissariat à l'Energie Atomique et aux Energies Alternatives 75015 Paris (FR)**

(72) Inventeur: **MARTINEZ, Christophe 38054 GRENOBLE cedex 09 (FR)**

(74) Mandataire: **INNOV-GROUP 209 Avenue Berthelot 69007 Lyon (FR)**

(56) Documents cités:
**US-A1- 2004 227 703     US-A1- 2006 228 073
US-A1- 2015 370 073     US-A1- 2017 184 776**

**Description**

## DOMAINE TECHNIQUE

Le domaine technique de l'invention concerne un écran directif et son utilisation dans un dispositif de projection d'une image sur un œil, par exemple dans des applications de type réalité augmentée.

## ART ANTERIEUR

Les dispositifs portables de réalité augmentée, tels que les lunettes, permettent d'observer une scène réelle tout en visualisant des informations complémentaires. Ce type de dispositif est fréquemment basé sur des micro-écrans, permettant de former une image à proximité immédiate d'un œil d'un utilisateur. De tels micro-écrans peuvent par exemple être intégrés à une lunette. Un système optique, comportant un jeu de lentilles, permet la perception d'une image nette par l'œil.

Le brevet US9632317, ainsi que la publication Martinez « See-trough holographic retinal projection display concept », Optica, Vol. 5 N° 10, oct. 2018, décrivent un dispositif permettant une projection, sur la rétine d'un œil, sans écran ni système optique. Le dispositif comporte un circuit optique intégré transparent composé d'un réseau de guides de lumière nanométriques, d'un réseau d'électrodes et d'un film holographique. Un tel dispositif est compact, et permet d'obtenir un champ de vision étendu. De plus, cela permet de ne pas utiliser de système optique volumineux et de conception complexe.

Les guides de lumière permettent de définir un ensemble de points d'émission sur le film holographique, chaque point étant susceptible d'être illuminé par une lumière extraite d'un guide de lumière. L'ensemble de points d'émission est subdivisé en différents sous-ensembles, chaque sous-ensemble comportant des points d'émission répartis, le plus aléatoirement possible, sur le film holographique. Les points d'émission d'un même sous-ensemble peuvent être simultanément illuminés par les différents guides de lumière. Sous l'effet de l'illumination, chaque point d'émission du même sous-ensemble émet une onde lumineuse se propageant selon une même direction jusqu'à la pupille de l'œil, de façon à former un point lumineux unique au niveau de la rétine. De cette façon, chaque sous-ensemble de points d'émission permet une formation d'un pixel de l'image perçue par l'utilisateur. Une image peut être formée en illuminant successivement différents sous-ensembles de points, de façon à former une image comportant un nombre élevé de pixel.

Une telle configuration permet de former un dispositif très compact. Toutefois, cela suppose un recours à un grand nombre de sources laser différentes.

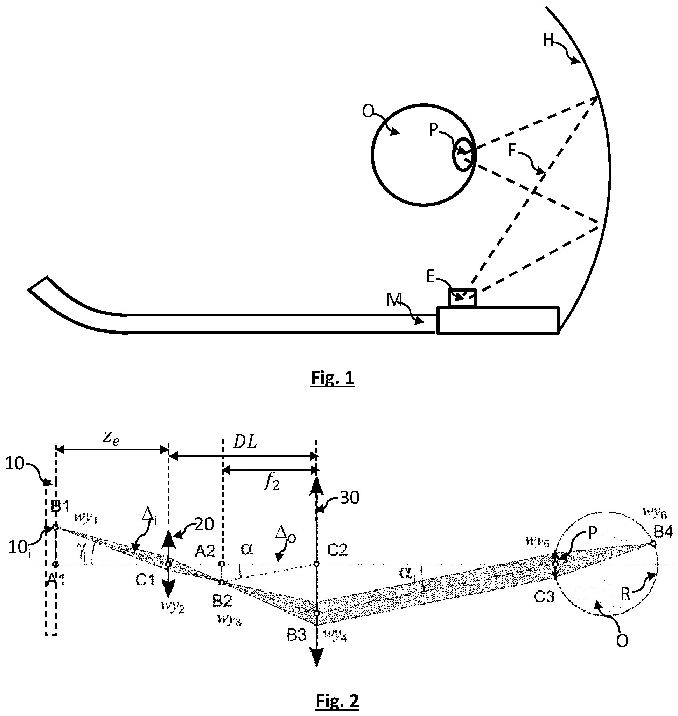

D'autres technologies ont été décrites, permettant de projeter une image sur un œil à l'aide d'un dispositif compact. Le brevet US10254547 décrit par exemple une lunette comportant un dispositif de projection d'une image virtuelle. Le principe de fonctionnement est schématisé sur la figure 1. Un émetteur de lumière E est disposé sur la monture M d'une lunette. L'émetteur de lumière E génère des faisceaux lumineux F se propageant vers un réflecteur holographique H. Le réflecteur holographique H est formé sur le verre de la lunette. Il est configuré pour réfléchir chaque faisceau lumineux vers la pupille P d'un œil O d'un utilisateur. L'émetteur de lumière est formé par une source de lumière couplée à un miroir mobile. Le miroir mobile est déplacé, de façon à former successivement des faisceaux lumineux balayant le réflecteur holographique. Ainsi, l'utilisateur perçoit des faisceaux lumineux réfléchis, de différentes directions angulaires. Lorsque l'intensité de chaque faisceau est modulée durant le balayage, l'utilisateur perçoit une image.

D'autres documents décrivent des configurations selon lesquelles un faisceau lumineux effectue un balayage d'un réflecteur holographique. Citons par exemple US2019/0285897 ou US20180299680.

Un inconvénient des configurations à balayage est que la boîte à œil est de faible dimension. Une boîte à œil, usuellement désignée par le terme anglosaxon « Eye box », désigne un volume dans lequel l'œil peut être déplacé pour percevoir une image nette. Le déplacement de l'œil peut être dynamique pour un utilisateur, lors de la rotation de l'œil qui balaie le champ de vision. Il peut également être variable d'un utilisateur à un autre du fait des écarts entre les distances interpupillaires. Avec une Eye Box de faible dimension, un dispositif peut convenir à un utilisateur mais pas à un autre, par exemple si les deux utilisateurs ont des distances interpupillaires différentes.

Un autre inconvénient est lié au recours à un système mécanique permettant d'effectuer le balayage. Le recours à un système mécanique de balayage et à des composants mobiles accroît la complexité et le coût du dispositif.

US20060228073 décrit des dispositifs de projection d'image dans un œil comportant un écran et un guide d'onde ainsi que des motifs holographiques qui sont projetés vers un œil.

Les inventeurs proposent une configuration alternative aux dispositifs de projection à balayage précédemment cités. L'objectif est de proposer une solution sans composant mobile, tout en améliorant le confort d'utilisation, en augmentant la taille de la boîte à œil.

## EXPOSE DE L'INVENTION

Un premier objet de l'invention est un dispositif de projection d'une image sur un œil, le dispositif comportant :

- un émetteur de lumière, configuré pour émettre des ondes lumineuses respectivement selon différents axes d'émission ;
- un combineur optique, optiquement couplé à l'émetteur de lumière, et configuré pour former, à partir de chaque onde lumineuse émise par l'émetteur de lumière, une onde lumineuse collimatée se propageant vers la pupille de l'œil ;

le dispositif étant caractérisé en ce que :

- l'émetteur de lumière comporte un écran, comprenant différents pixels, chaque pixel étant configuré pour émettre une onde lumineuse divergente se propageant autour d'un axe d'émission, les différents pixels émettant respectivement des ondes lumineuses divergentes se propageant respectivement selon différents axes d'émission ;
- le combineur optique est configuré pour recevoir chaque onde lumineuse émise par un pixel et former une onde lumineuse collimatée se propageant vers une position centrale, correspondant au centre de la pupille de l'œil.

Le dispositif peut comporter une lentille convergente interposée entre l'écran et le combineur optique, la lentille convergente s'étendant autour d'un centre, le centre de la lentille formant, avec un centre du combineur, un axe optique du dispositif, la lentille étant disposée de telle sorte que :

- l'image de l'écran, par la lentille convergente, est formée dans un plan focal objet du combineur ;
- l'image du centre de la lentille convergente, par le combineur, est formée à la position centrale ;
- de façon que l'onde lumineuse collimatée, résultant du combineur, atteint la position centrale en formant un angle dépendant de la position du pixel de l'écran.

Selon un mode de réalisation préféré :

- l'écran est un écran directif, chaque pixel étant configuré pour émettre une onde lumineuse divergente selon un axe d'émission prédéfini, l'onde lumineuse se propageant selon un angle de divergence, prédéfini, par rapport à l'axe d'émission ;
- les axes d'émission respectifs de pixels convergent vers le centre de la lentille convergente.

L'écran peut comporter un empilement comprenant :

- des guides de lumière, chaque guide de lumière étant couplé à une pluralité de réseaux de diffraction, répartis le long du guide de lumière, chaque réseau de diffraction étant électriquement modulable, chaque réseau de diffraction étant configuré pour être modulé électriquement de façon à extraire une lumière se propageant dans le guide de lumière ;
- des électrodes, chaque électrode étant associée à plusieurs réseaux de diffraction respectivement couplés à différents guides de lumière, chaque électrode étant configurée pour moduler chaque réseau de diffraction auquel elle est associée ;
- chaque pixel de l'écran correspondant à une association entre une électrode et un réseau de diffraction couplé à un guide de lumière ;

de façon que sous l'effet d'une illumination par une lumière extraite du guide de lumière, chaque pixel est configuré pour émettre une onde lumineuse divergente, se propageant autour d'un axe d'émission du pixel, en formant un cône d'émission, défini par un angle de divergence autour de l'axe d'émission du pixel.

L'écran peut comporter un film holographique subdivisé en différentes zones élémentaires, chaque zone élémentaire étant associée au réseau de diffraction d'un pixel, et configurée pour émettre l'onde lumineuse divergente, selon l'axe d'émission et l'angle de divergence du pixel, sous l'effet d'une lumière extraite par le réseau de diffraction auquel elle est associée.

Selon une possibilité :

- plusieurs guides de lumière sont reliés à une même source de lumière ;
- un modulateur de lumière s'étend entre la source de lumière et chaque guide de lumière, de façon à moduler une intensité de la lumière, émise par la source de lumière, alimentant chaque guide de lumière.

Le dispositif peut comporter plusieurs sources de lumière, chaque source de lumière étant optiquement reliée à plusieurs guides de lumière.

Différentes sources de lumière peuvent être configurées pour émettre une lumière respectivement selon différentes longueurs d'onde.

Les pixels peuvent être agencés selon :

- des lignes, chaque ligne étant définie par un guide de lumière, le guide de lumière s'étendant le long de différents pixels de la ligne ;
- des colonnes, chaque colonne étant définie par une électrode, l'électrode s'étendant le long de différents pixels le long de la colonne.

Le dispositif peut comporter :

- plusieurs lentilles convergentes, alignées parallèlement à l'écran directif, chaque lentille s'étendant autour d'un centre et présentant un même plan focal objet ;
- le dispositif étant tel que
- l'écran est disposé parallèlement à chaque lentille convergente ;
- chaque lentille convergente est associée à des pixels de l'écran directif ;
- l'axe d'émission de chaque pixel associé à la lentille converge vers le centre de la lentille convergente à laquelle il est associé.

Le dispositif peut être tel que :

- deux pixels adjacents sont distants d'un pas spatial ;
- l'écran comporte une partie centrale, entourée d'une partie périphérique ;
- le pas spatial entre deux pixels adjacents de la partie centrale est inférieur au pas spatial entre deux pixels adjacents de la partie périphérique.

De préférence, le combineur est un combineur holographique.

Le dispositif peut être tel que :

- l'écran émet une lumière selon au moins une bande spectrale d'émission ;
- le combineur holographique est transparent en dehors de la ou de chaque bande spectrale d'émission ;
- le combineur holographique forme une lentille convergente dans la ou chaque bande spectrale d'émission.

Le dispositif peut être tel que le combineur holographique forme un réflecteur dans la ou chaque bande spectrale d'émission.

Le dispositif peut être tel que la lentille convergente est mobile en translation par rapport à l'écran, le long de l'axe optique. Le dispositif peut être tel que la lentille convergente présente une distance focale variable.

Par onde lumineuse collimatée, on entend une onde lumineuse dont la divergence ou la convergence est suffisamment faible pour que l'onde soit considérée comme formée de faisceaux se propageant parallèlement les uns aux autres. Par divergence ou convergence faible, on entend formant un angle de divergence (ou de convergence) inférieur à 2° ou à 1°.

Un autre objet de l'invention est un écran directif, comportant différents pixels :

- chaque pixel étant configuré pour émettre une onde lumineuse divergente se propageant autour d'un axe d'émission, les différents pixels émettant respectivement des ondes lumineuses divergentes se propageant respectivement selon différents axes d'émission ;
- chaque pixel étant configuré pour émettre une onde lumineuse divergente selon un axe d'émission prédéfini, l'onde lumineuse se propageant selon un angle de divergence, prédéfini, par rapport à l'axe d'émission.

L'écran peut comporter un empilement comprenant :

- des guides de lumière, chaque guide de lumière étant couplé à une pluralité de réseaux de diffraction, répartis le long du guide de lumière, chaque réseau de diffraction étant électriquement modulable, chaque réseau de diffraction étant configuré pour être modulé électriquement de façon à extraire une lumière se propageant dans le guide de lumière ;
- des électrodes, chaque électrode étant associée à plusieurs réseaux de diffraction respectivement couplés à différents guides de lumière, chaque électrode étant configurée pour moduler chaque réseau de diffraction auquel elle est associée ;

- chaque pixel de l'écran correspondant à une association entre une électrode et un réseau de diffraction couplé à un guide de lumière ;

de façon que sous l'effet d'une illumination par une lumière extraite du guide de lumière, chaque pixel est configuré pour émettre une onde lumineuse divergente, se propageant autour d'un axe d'émission du pixel, en formant un cône d'émission, défini par un angle de divergence autour de l'axe d'émission du pixel.

L'écran peut comporter un film holographique subdivisé en différentes zones élémentaires, chaque zone élémentaire étant associée au réseau de diffraction d'un pixel, et configurée pour émettre l'onde lumineuse divergente, selon l'axe d'émission et l'angle de divergence du pixel, sous l'effet d'une lumière extraite par le réseau de diffraction auquel elle est associée.

Selon une possibilité :

- plusieurs guides de lumière sont reliés à une même source de lumière ;
- un modulateur de lumière s'étend entre la source de lumière et chaque guide de lumière, de façon à moduler une intensité de la lumière, émise par la source de lumière, alimentant chaque guide de lumière.

L'écran peut comporter plusieurs sources de lumière, chaque source de lumière étant optiquement reliée à plusieurs guides de lumière. Différentes sources de lumière peuvent être configurées pour émettre une lumière respectivement selon différentes longueurs d'onde.

Les pixels peuvent être agencés selon :

- des lignes, chaque ligne étant définie par un guide de lumière, le guide de lumière s'étendant le long de différents pixels de la ligne ;
- des colonnes, chaque colonne étant définie par une électrode, l'électrode s'étendant le long de différents pixels le long de la colonne.

L'invention sera mieux comprise à la lecture de l'exposé des exemples de réalisation présentés, dans la suite de la description, en lien avec les figures listées ci-dessous.

## FIGURES

La figure 1 représente une configuration de l'art antérieur.
La figure 2 est un schéma optique d'un dispositif selon l'invention.
La figure 3A schématise les caractéristiques angulaires d'émission de pixels d'un écran directif.
La figure 3B montre la structure d'un écran directif.
La figure 4 représente un enregistrement d'un hologramme d'un écran directif.
La figure 5A représente une couche d'un écran directif, dans laquelle des guides de lumière sont formés.
La figure 5B montre une couche d'un écran directif, dans laquelle on forme des réseaux de diffraction électriquement activables, couplés à des électrodes.
La figure 5C montre une couche d'un écran directif comportant des hologrammes préalablement enregistrés.
La figure 5D représente une variante d'un écran directif permettant le recours à différentes sources de lumière, émettant potentiellement dans différentes bandes spectrales.
Les figures 6A à 6F schématisent les différentes couches formant un écran directif.
La figure 7A est un schéma optique d'une lentille convergente.
La figure 7B montre une phase d'enregistrement d'une partie de la lentille holographique.
La figure 7C représente une utilisation de la lentille holographique.
Les figures 8A et 8B schématisent un premier exemple de réalisation.
Les figures 8C et 8D schématisent un deuxième exemple de réalisation.
La figure 9 illustre la collection, par une lentille, d'un faisceau émis par un pixel d'un écran directif.
La figure 10A montre le rendement (axe des ordonnées) en fonction de la position des pixels par rapport à l'axe optique (axe des abscisses), et cela pour trois valeurs angulaires de divergence.
La figure 10B montre la taille de l'Eye-box formée par le dispositif (axe des ordonnées) en fonction de l'angle de divergence.
La figure 11 montre une variante d'un dispositif, permettant d'augmente la taille de la Eye-Box
La figure 12 montre une variante d'un écran directif, comportant une partie centrale à haute résolution.

**EXPOSE DE MODES DE REALISATION PARTICULIERS**

La figure 2 schématise les principaux éléments d'un dispositif 1 selon l'invention. Le dispositif comporte un écran 10, comportant des pixels $10_i$. Chaque pixel 10i émet une onde lumineuse divergente, dans une bande spectrale d'émission, se propageant selon un axe d'émission $\Delta_i$. L'axe d'émission $\Delta_i$ est incliné d'un angle d'émission $\gamma_i$ par rapport à une direction perpendiculaire à l'écran. Avantageusement, l'écran 10 est un écran directif, tel que décrit par la suite. Les bandes spectrales d'émission respectives de chaque pixel peuvent être identiques ou différentes les unes des autres. Par simplification, la figure 2 décrit le principe de fonctionnement dans un plan mais le concept s'applique à un dispositif en 3 dimensions avec des pixels distribués selon une matrice et des directions à considérer suivant deux angles tels que la longitude et la latitude.

Le dispositif comporte un combineur 30. Le terme combineur désigne un composant qui combine à la fois une fonction optique de transparence, dans une bande spectrale de transparence, et une fonction optique de renvoi, dans une bande spectrale d'intérêt, de préférence étroite, et éventuellement de mise en forme d'un faisceau optique, généré hors de l'axe de la vision par l'écran. L'axe de vision correspond à un axe centré et perpendiculaire à la pupille de sortie. Le combineur peut associer dans une ou chaque bande spectrale d'intérêt, la fonction optique de type miroir et la fonction de mise en forme de type lentille convergente. En dehors de ces bandes spectrales le composant est transparent, les faisceaux optiques le traversent sans perturbation notable.

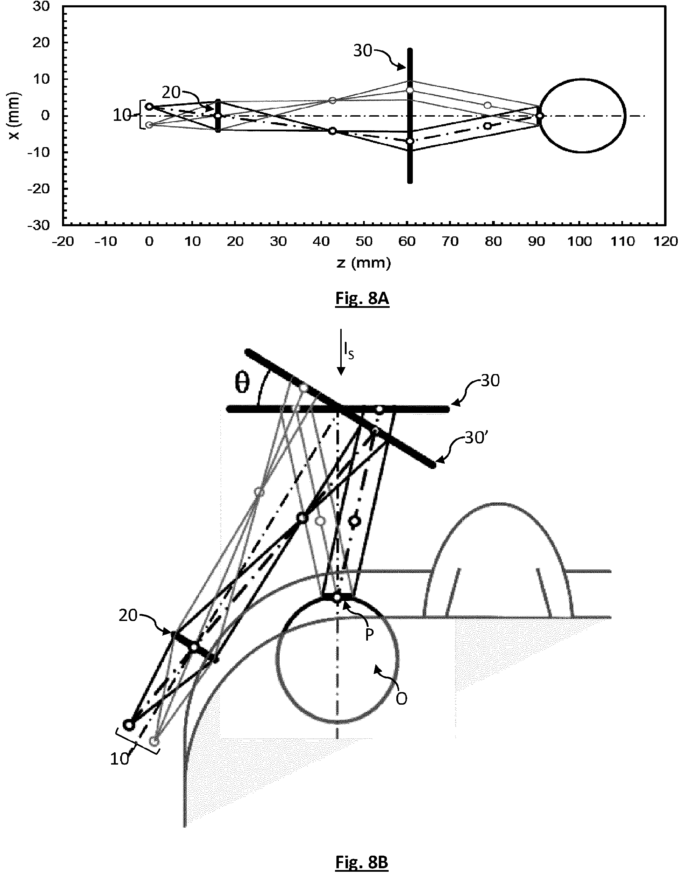

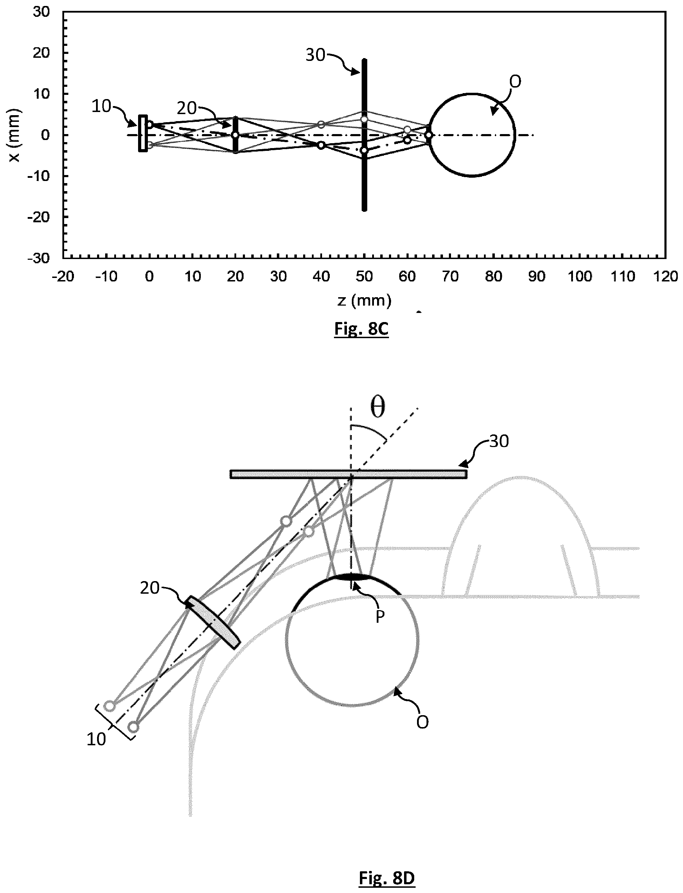

La figure 2 schématise un schéma optique « déplié », dans lequel le combineur 30 est représenté fonctionnant en transmission. A partir d'une onde lumineuse incidente divergente, le combineur 30 prend la forme d'une lentille formant une onde lumineuse collimatée, ou pouvant être considérée comme telle, c'est-à-dire faiblement divergente. Par faiblement divergente, on entend une onde dont l'angle de divergence est inférieur à 1°.. Cela permet de former, au niveau de l'œil, une image « à grande distance », c'est-à-dire une distance supérieure à 2 m. Des schémas optiques selon lesquels le combineur fonctionne en réflexion sont décrits par la suite, en lien avec les figures 8B et 8D.

Le combineur est configuré pour former, à partir de chaque onde lumineuse émise un pixel, une onde lumineuse collimatée se propageant vers la pupille de l'œil de l'utilisateur. De préférence, le combineur est un combineur holographique, la fonction de lentille et la fonction miroir étant codées dans un hologramme formé le long du combineur.

Le recours à un combineur holographique est connu de l'homme du métier. Un combineur holographique a l'avantage d'être compact, car formé par une couche mince holographique déposée sur un support, de type verre de lunette. Un combineur holographique est très sélectif en longueur d'onde. L'hologramme est transparent à la majorité du spectre visible, hormis une longueur d'onde spécifique à laquelle il est sensible. La fonction de convergence du combineur, de même que la fonction de déviation angulaire, sont codées dans l'hologramme, comme décrit par la suite.

Le dispositif comporte une lentille convergente 20, définissant un plan focal objet et un plan focal image. La lentille convergente 20 est interposée entre l'écran 10 et le combineur 30. L'écran 10 est disposé au niveau d'un plan objet de la lentille convergente 20. La lentille convergente forme une image de l'écran dans un plan image, ce dernier correspondant au plan focal objet du combineur. La lentille 20 et le combineur 30 sont centrés par rapport à un axe optique $\Delta_0$ du dispositif. Le recours à la lentille 20 permet d'éloigner l'écran du combineur. Cela facilite l'intégration du dispositif dans un équipement de type lunette ou casque de réalité virtuelle.

Sur la figure 2, les notations $wy_1$, $wy_2$, $wy_3$, $wy_4$, $wy_5$, $wy_6$ désignent respectivement les tailles du faisceau de l'onde lumineuse émise par le pixel $10_i$, aux points B1, C1, B2, B3, C3 et B4 le long de l'axe de propagation de l'onde. L'écran s'étend selon un plan objet passant par le point A1, avec un vecteur normal confondu ou voisin avec l'axe optique $\Delta_0$ ; Par voisin, on entend selon une tolérance angulaire de $\pm$ 5°.

- la lentille 20 forme une image de l'écran en un plan image, de vecteur normal voisin à l'axe optique $\Delta_0$ ;
- le point C1 correspond au centre de la lentille 20 ;
- le point C2 correspond au centre du combineur 30 ;
- le point C3 correspond à une position, dite position centrale, correspondant au centre de la pupille P d'un œil O de l'utilisateur. Lorsque l'utilisateur utilise le dispositif, il est supposé centrer sa pupille sur la position centrale. Le point C3 correspond également au centre de la boîte à image (Eye Box) formée par le dispositif. La boîte à image correspond au débattement de la pupille de l'utilisateur, autour du point C3, permettant d'observer l'image affichée sur l'écran. Le combineur est disposé de façon à conjuguer le point C1 (centre de la lentille, pupille d'entrée) avec le point C3 (centre de la pupille de sortie).
- le point B1 correspond à la position du pixel $10_i$ de l'écran 10 ;
- le point B2 correspond à l'image du point B1 par la lentille 20 ;
- le point B3 correspond à une intersection entre l'axe d'émission $\Delta_i$ et le combineur.
- le point B4 correspond à un point de la rétine R conjugué du point B1 par le système formé par la lentille 20 et le combineur 30. $wy_6$ correspond à la taille du faisceau au niveau d'un pixel de l'image formée, sur la rétine, par le dispositif.
- Les points C1, C2 et C3 sont alignés le long de l'axe optique défini par la lentille 20 et du combineur 30. L'écran est dans un plan de vecteur normal voisin à l'axe optique $\Delta_0$. De préférence, le point A1, qui correspond au centre de l'écran, est également sur l'axe optique $\Delta_0$, comme représenté sur la figure 2. La distance entre les points C2 et C3 correspond à un dégagement oculaire, usuellement désigné par le terme « EyeRelief ».

- Dans une configuration en réflexion, les points C1, C2 et C3 ne sont pas alignés du fait du repliement du faisceau effectué par le combineur. Cf. figures 8B et 8D.

L'écran 10 s'étend dans un plan de vecteur normal voisin à l'axe optique $\Delta_0$, passant par A1. Comme précédemment indiqué, une image de l'écran 10 est formée, par la lentille 20, dans un plan image de vecteur normal voisin à l'axe optique $\Delta_0$ et passant par le point A2. Le plan image est disposé, ou est suffisamment proche pour être considéré comme être disposé, sur le plan focal objet du combineur holographique 30.

Le combineur holographique 30 est disposé de telle sorte que l'image du point C1, par le combineur holographique, correspond au point C3, c'est-à-dire une position à laquelle l'utilisateur place la pupille P de son œil O. L'onde lumineuse collimatée, résultant du combineur 30, se propage vers la pupille en formant un angle $\alpha_i$, dit angle apparent. L'angle apparent $\alpha_i$ dépend de la position du point B1, c'est-à-dire du pixel $10_i$.

Ainsi, à chaque pixel $10_i$ de l'écran 10, le système optique formé par la lentille 20 et le combineur 30, définit un angle $\alpha_i$ selon lequel l'onde lumineuse émise par le pixel, et collimatée par le combineur 30, atteint la pupille de l'utilisateur. Les angles apparents $\alpha_i$, déterminés pour deux pixels différents sont différents.

L'onde lumineuse collimatée résultant du combineur est focalisée par l'œil de façon à former un pixel d'une image de l'écran, formée sur la rétine R de l'œil. Le pixel de l'image formée sur la rétine correspond au point B4. La position de B4 est définie par l'angle apparent $\alpha_i$, ce dernier étant différent pour chaque pixel $10_i$. On comprend que le dispositif permet une formation de l'image formée par l'écran 10, sur la rétine R.

Le combineur permet la génération d'une onde collimatée au niveau de l'œil de sorte que lorsque l'utilisateur regarde au loin un objet (distance œil/objet grande par rapport à la taille de l'œil), par exemple le sommet d'une montagne, il peut également percevoir l'image de l'écran, ce dernier générant des informations de type réalité augmentée, par exemple le nom du sommet et son altitude. La notion de collimation est donc relative. Bien que théoriquement associée à une image placée à l'infini, elle peut également s'appliquer à une image placée à grande distance (typiquement au-delà de 100 fois la taille de l'œil, environ à 2 mètres de l'observateur). Le dispositif décrit en figure 2 peut être fixe, figé par les distances entre l'écran et les optiques (lentille 20 et combineur 30). L'image projetée dans l'œil représente l'écran comme si ce dernier était à l'infini. Avantageusement il est possible de rendre le dispositif dynamique en déplaçant l'écran dans le plan objet de la lentille ou en utilisant une lentille 20 à focale variable. Cela permet d'ajuster la distance d'accommodation.

De préférence, l'écran 10 est un écran directif. Le terme écran directif désigne un écran dont chaque pixel est configuré pour émettre une onde lumineuse divergente selon un axe d'émission, formant un angle d'émission par rapport à une direction normale à l'écran, l'onde lumineuse se propageant selon un angle de divergence par rapport à l'axe d'émission, l'écran étant tel que :

- l'angle de divergence est prédéterminé, de préférence inférieur à 45° ou inférieur à 30° ;
- et/ou les axes d'émission de deux pixels différents sont différents ;
- et/ou les angles de divergence de deux pixels différents sont différents ;
- et/ou au moins un axe d'émission d'un pixel est incliné par rapport à la direction normale à l'écran.

L'axe d'émission du pixel $10_i$ est orienté vers le centre de la lentille 20. Ainsi, chaque pixel $10_i$ de l'écran 10 est configuré pour émettre une onde lumineuse, autour d'un axe d'émission $\Delta_i$ dont l'angle d'émission $\gamma_i$ est tel que l'axe d'émission $\Delta_i$ passe par le centre C1 de la lentille 20. Il en résulte que les angles d'émission respectifs de différents pixels $10_i$ sont différents les uns des autres et convergent vers le centre C1 de la lentille 20.

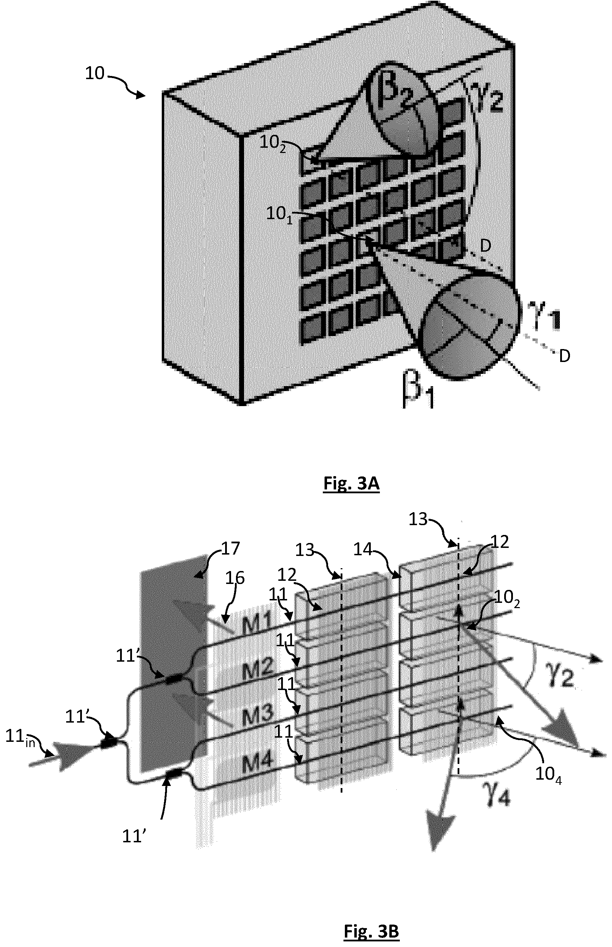

Les figures 3A et 3B montrent le fonctionnement de l'écran directif 10. L'écran directif est formé par plusieurs pixels $10_i$, de préférence agencés selon des lignes et des colonnes. Chaque pixel est configuré pour émettre une onde lumineuse selon un angle d'émission, par rapport à une direction D normale au plan selon lequel s'étend l'écran. Sur la figure 3A, on a représenté :

- un pixel $10_1$, émettant une onde lumineuse divergente se propageant selon un axe de propagation formant un angle d'émission $\gamma_1$ par rapport à la direction D, et formant un cône dont le demi-angle au sommet, dit angle de divergence, est noté $\beta_1$ ;
- un pixel $10_2$, émettant une onde lumineuse divergente se propageant selon un axe de propagation formant un angle d'émission $\gamma_2$ par rapport à la direction D, et formant un angle de divergence $\beta_2$.

La figure 3B schématise une structure de l'écran directif. L'écran directif comporte des guides de lumière 11. Chaque guide de lumière 11 est relié à une source de lumière $11_{in}$. Contrairement à la configuration décrite dans US9632317, la source de lumière $11_{in}$ peut être une source laser, mais également une source non cohérente, par exemple une diode électroluminescente. Dans l'exemple représenté, chaque guide de lumière s'étend selon une ligne, et plus précisément le long de différents pixels de la ligne. Les guides de lumière peuvent par exemple être formés de SIN (nitrure de silicium), déposé dans une couche de $SiO_2$.

L'écran comporte :

- une première couche, dans laquelle sont formés des guides de lumière 11. Les guides de lumière sont configurés pour recevoir la lumière émise par la source de lumière $11_{in}$
- une deuxième couche, dans laquelle sont formés des réseaux de diffraction 12, de telle sorte que chaque réseau de diffraction 12 est couplé avec un guide de lumière 11. Les réseaux de diffraction 12 sont électriquement modulés. Chaque réseau de diffraction 12 correspond à une variation périodique d'indice de réfraction, susceptible d'être modulée électriquement. Les réseaux de diffraction 12 couplés à un même guide de lumière 11 sont espacés les uns des autres le long du guide de lumière, et sont considérés comme ponctuels. Chaque réseau de diffraction 12 peut être formé d'inclusions, définissant un motif périodique, dans de l'oxyde de silicium ($SiO_2$), chaque inclusion étant formée d'un matériau dont l'indice de réfraction est électriquement modulable, par exemple un cristal liquide. Lorsque la longueur d'onde de la lumière est de 532 nm, la période du motif du réseau de diffraction 12 peut être compris entre 200 nm et 500 nm. Un réseau de diffraction peut s'étendre selon 10 motifs périodiques, et s'étendre ainsi sur une longueur de 2 ou 5 $\mu$m.

- une troisième couche, dans laquelle sont formées des électrodes transparentes 13, les électrodes étant configurées pour moduler électriquement l'indice de réfraction d'un matériau formant les réseaux de diffraction. Les électrodes transparentes peuvent être formées d'un matériau conducteur transparent, par exemple ITO (oxyde d'indium étain). Chaque électrode peut ainsi activer un réseau de diffraction sous l'effet de la modulation électrique. Dans l'exemple représenté, les électrodes transparentes s'étendent parallèlement à des colonnes.
- une quatrième couche, dite couche holographique, correspondant à un film holographique 14. Par film holographique, il est entendu un support photosensible susceptible d'enregistrer un hologramme. Le film holographique est supposé suffisamment fin pour être assimilé à la surface d'émission. Le film holographique peut être un photopolymère de type photorésine ou une suspension de composés sensible à la lumière comme un halogénure d'argent.

Les couches sont formées sur un support transparent. Il peut par exemple s'agir d'un support en verre ou en polycarbonate.

Sous l'effet d'une polarisation par une électrode 13, chaque réseau de diffraction ponctuel 12 est activé, au sens où il permet une extraction d'une partie de la lumière se propageant dans un guide de lumière 11 auquel le réseau de diffraction 12 est couplé. La lumière extraite se propage vers le film holographique 14, et plus précisément vers une zone élémentaire $14_i$ du film holographique $14_i$. Sous l'effet de l'illumination, la zone élémentaire du film holographique émet une onde lumineuse selon des caractéristiques angulaires prédéfinies. Par caractéristiques angulaires, on entend un angle d'émission $\gamma_i$ et un angle de divergence $\beta_i$.

Ainsi, chaque pixel $10_i$ de l'écran correspond à une superposition d'un réseau de diffraction ponctuel 12 couplé à un guide de lumière 11, et d'une électrode 13, face à une zone élémentaire $14_i$ du film holographique 14. L'association entre chaque électrode 13 et chaque réseau de diffraction 12 forme une structure d'extraction d'une partie de la lumière se propageant dans un guide de lumière 11.

Dans l'exemple représenté, les guides de lumière 11 sont coplanaires. Il en est de même des électrodes 13. Ainsi, les électrodes 13 sont superposées aux guides de lumière 11. Chaque électrode « croise » plusieurs guides de lumière, de façon à définir plusieurs intersections, chaque intersection correspondant à un pixel de l'écran. Le terme « croiser » est à interpréter comme désignant une superposition d'une électrode et d'un guide de lumière. La position de chaque pixel est définie par le positionnement des guides de lumière et des électrodes. Les caractéristiques angulaires d'émission sont définies par l'hologramme formant la zone élémentaire $14_i$, illuminée par une extraction de la lumière se propageant dans le guide de lumière.

Sur la figure 3B, on a représenté un pixel $10_2$ et un pixel $10_4$. Chaque zone élémentaire de l'hologramme faisant face à ces pixels est respectivement configurée pour émettre une onde lumineuse selon des caractéristiques angulaires prédéfinies, codées dans l'hologramme. Sur la figure 3B, on a représenté les angles d'émission $\gamma_2$ et $\gamma_4$ définis pour les pixels $10_2$ et $10_4$. Les caractéristiques angulaires d'émission peuvent être définies, pour chaque pixel, indépendamment des autres pixels.

Des diviseurs 11' peuvent être disposés, par exemple des jonctions en Y, de façon à répartir la lumière, émise par une même source de lumière $11_{in}$, vers différents guides de lumière 11. Afin de moduler l'intensité de la lumière se propageant dans un guide de lumière, chaque guide de lumière 11 peut être couplé à un modulateur. Sur la figure 3B, on a représenté quatre modulateurs M1, M2, M3 et M4. Chaque modulateur comporte un extracteur 16, configuré pour être activable électriquement, de façon à extraire tout ou partie de la lumière se propageant dans un guide de lumière. Chaque extracteur peut être similaire à un réseau de diffraction 12 tel que précédemment décrit. Lorsqu'un extracteur est activé, la lumière se propageant à travers le guide de lumière 11 est extraite, de préférence vers un absorbeur 17. La présence de l'absorbeur permet de dissiper la lumière extraite, afin d'éviter une propagation d'une lumière parasite à travers l'écran 10. L'utilisation des modulateurs permet d'ajuster l'intensité de pixels de l'écran simultanément activés.

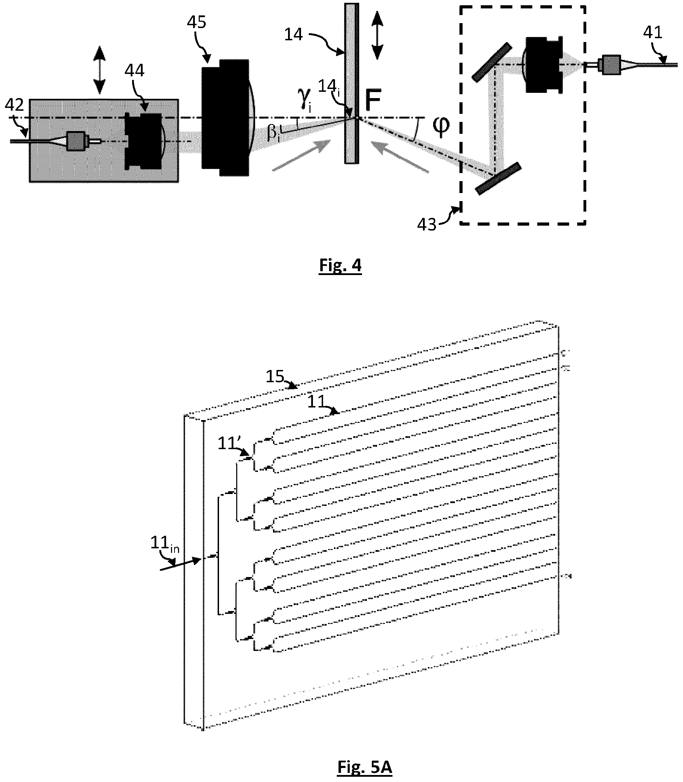

Les caractéristiques angulaires d'émission de chaque pixel $10_i$ sont définies au cours d'une phase préalable d'enregistrement du film holographique 14. De façon connue, un hologramme est formé par une interférence entre deux ondes lumineuses émises par une même source de lumière : une onde lumineuse objet et une onde lumineuse de référence. Les franges d'interférence générées sont mémorisées physiquement ou chimiquement dans le film holographique 14. Sur la figure 4, on a représenté un montage permettant l'enregistrement d'une zone élémentaire $14_i$ du film holographique 14.

Une source de lumière est couplée à deux fibres à l'aide d'un diviseur, de manière à obtenir une fibre formant un faisceau objet 42 et une fibre formant un faisceau de référence 41. La source de lumière a une longueur d'onde proche de celle de la lumière $11_{in}$ à laquelle l'écran 10 est connecté lors de son utilisation. Cette source est typiquement un laser de grande longueur de cohérence (supérieure au mètre).

La fibre formant le faisceau de référence 41 reproduit les conditions d'illumination similaires à celles obtenues par une extraction de la lumière d'un guide de lumière 11 par activation d'un réseau de diffraction 12. Par conditions d'illumination, on entend l'incidence du faisceau, sa taille et sa divergence. Le faisceau de référence 41 est fixe et est formé par un système optique de mise en forme de référence 43.

Le faisceau objet est généré par un système optique de mise en forme objet 44 couplé à une optique de focalisation convergente 45. Cela permet de régler un angle d'incidence $\gamma_i$ et un angle de divergence $\beta_i$ du faisceau objet. L'enregistrement d'un hologramme, dans une zone élémentaire $14_i$, est effectué en exposant simultanément ladite zone élémentaire au faisceau objet et au faisceau de référence. Les différents hologrammes, au niveau de chaque zone élémentaire, sont réalisés en déplaçant le film holographique 14 et en modifiant éventuellement les caractéristiques du faisceau objet, en particulier l'angle d'incidence $\gamma_i$ et l'angle de divergence $\beta_i$. Ainsi, à chaque zone élémentaire $14_i$ est assigné un angle d'incidence $\gamma_i$ et un angle de divergence $\beta_i$, qui correspondent aux angles d'incidence et de divergence du faisceau objet lors de l'enregistrement de l'hologramme.

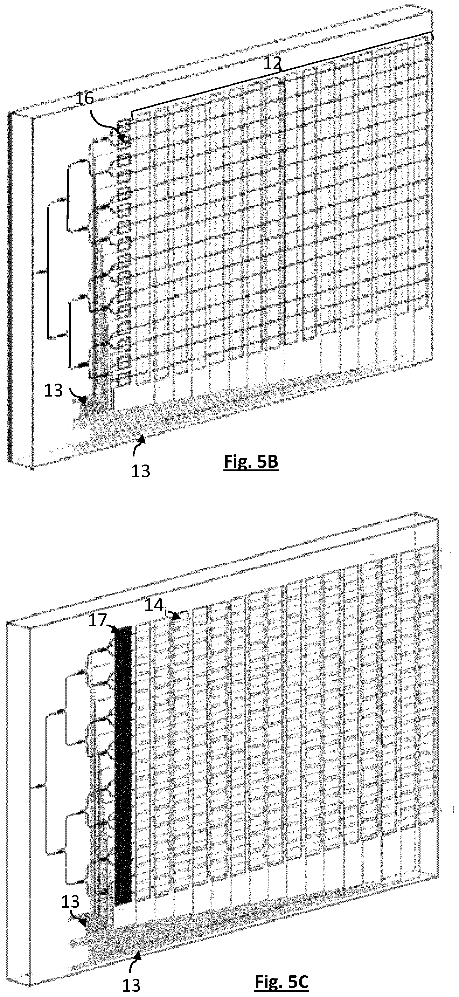

Les figures 5A à 5D schématisent différentes couches précédemment évoquées. Sur la figure 5A, on a représenté une couche structurée, définissant les guides de lumière 11, formée sur un substrat en verre 15. La figure 5B montre une couche d'extraction, formée par les réseaux de diffraction 12, 16 précédemment décrits. La figure 5C montre une couche holographique, comportant les zones élémentaires holographiques $14_i$ ainsi que l'absorbeur 17.

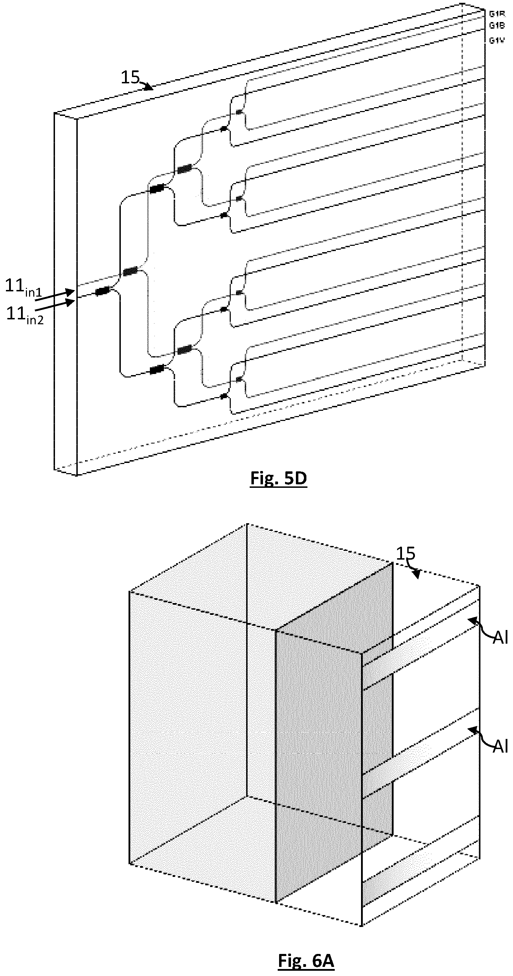

Un avantage de l'écran holographique est de réduire le nombre de sources de lumière par rapport à la configuration décrite dans US9632317. L'écran directif peut être formé d'une seule source de lumière. Il est alors monochrome. L'écran directif peut être formé de plusieurs sources de lumière émettant selon des bandes spectrales différentes. Une telle configuration est représentée sur la figure 5D. Plusieurs guides de lumière peuvent être formés, sur une même couche, de façon à former des réseaux indépendants de guides de lumière. Chaque réseau de guide de lumière est destiné à être couplé optiquement à une source de lumière émettant dans une bande spectrale déterminée. Sur la figure 5D, on a représenté deux réseaux de guide de lumière destinés à être optiquement couplés à deux sources de lumières $11_{in1}$ et $11_{in2}$. Les différents guides de lumière peuvent être réalisés sur le même substrat 15. L'agencement des guides de lumière permet d'éviter les interférences (cross-talk) entre les guides de lumière à chaque intersection.

Les figures 6A à 6F illustrent les étapes de fabrication d'un écran directif 10. Sur la figure 6A, Des bandes de matériau réfléchissant (par exemple un métal comme l'aluminium Al), destinées à faire office de réflecteur, sont déposées sur un substrat 15, en formant des lignes. Les bandes d'aluminium, de largeur 1 $\mu$m, sont espacées de 5 $\mu$m les unes des autres.

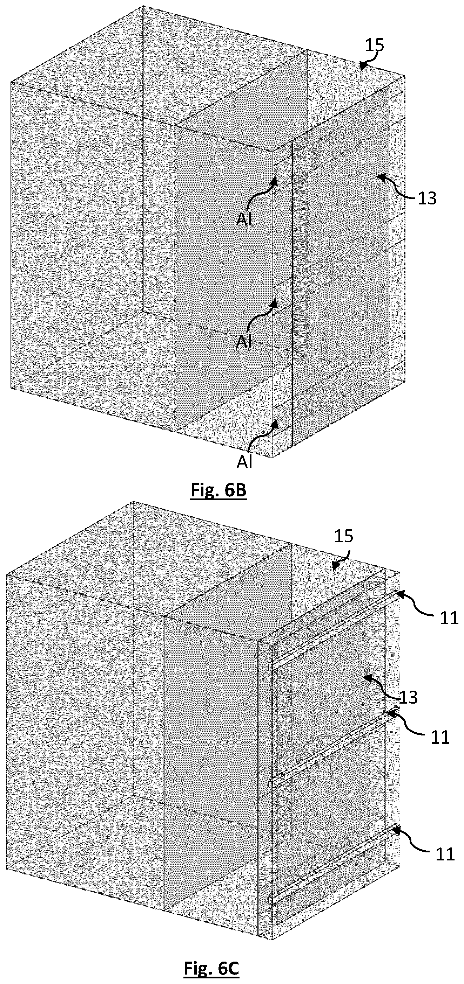

Sur la figure 6B, on a représenté une couche d'électrodes d'adressage 13, sous la forme d'une couche structurée d'ITO (Oxyde d'indium-étain), d'épaisseur 40nm. La couche d'ITO peut faire l'objet d'une structuration, de façon à former des électrodes s'étendant selon des colonnes, perpendiculaires aux lignes.

Sur la figure 6C, on a représenté le dépôt d'une couche de $SiO_2$, dans laquelle des guides de lumière 11 en SiN sont formés. Les guides ont une largeur d'environ 400 nm et une épaisseur comprise entre 100 nm et 400 nm. Le choix de SiN se justifie par ses propriétés de transparence dans le domaine visible.

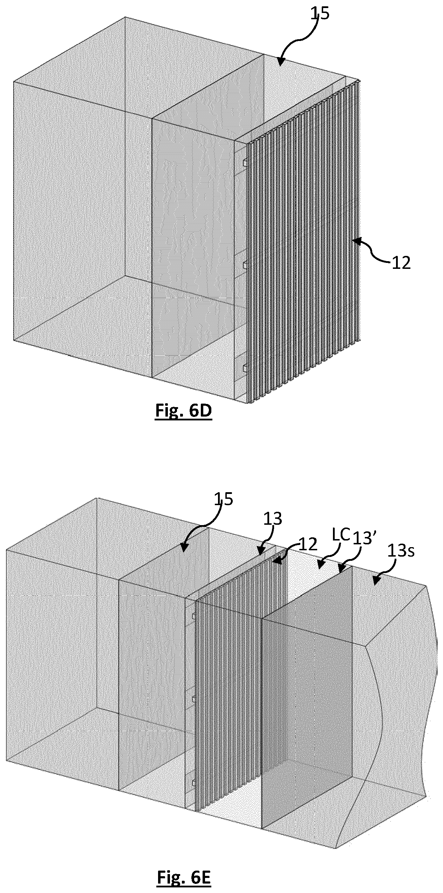

Sur la figure 6D, on a représenté un dépôt d'une couche structurée destinée à former un réseau de diffraction 12. Le réseau de diffraction est de préférence formé dans un matériau simple à structurer, par exemple un matériau de type sol-gel.

Le réseau de diffraction est encapsulé dans une couche de cristal liquide LC, dont l'indice de réfraction peut basculer entre deux valeurs en fonction de la tension appliquée par les électrodes. En fonction de la valeur de l'indice de réfraction, le réseau de diffraction 12 permet une extraction de la lumière se propageant à travers le guide de lumière. Une contre-électrode transparente 13', par exemple en ITO déposé sur un film transparent 13s (en verre ou en matériau transparent plastique), est disposée sur la couche de cristal liquide. Cf. figure 6E.

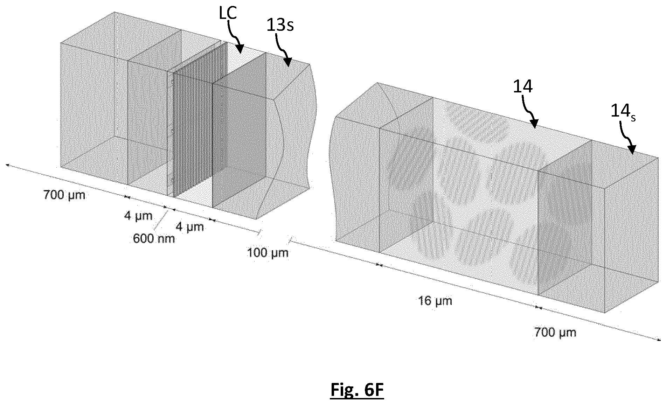

Sur la figure 6F, on a représenté le dépôt d'une couche holographique 14, supportée par un support transparent 14s, contre le film 13s permettant l'encapsulation du cristal liquide. La couche holographique 14 peut être formée d'un photopolymère, d'épaisseur 15 $\mu$m, tandis que le support 14s peut être formée de verre, d'épaisseur 700 $\mu$m. La couche holographique 14 a préalablement fait l'objet d'un enregistrement, comme décrit en lien avec la figure 4.

Sur la figure 6F, on a représenté l'ensemble des couches formant l'écran directif 10. L'épaisseur totale est de l'ordre de 1.5 mm. La surface de chaque pixel peut être de 5 $\mu$m x 5 $\mu$m . On peut ainsi former un écran de résolution 1920 x 1080 dont la surface est de 10 mm x 5 mm.

La configuration décrite sur la figure 2 fonctionne quel que soit le type d'écran. Cependant, des performances optimales sont obtenues en utilisant un écran directif tel que précédemment décrit. Plus précisément, il est avantageux que chaque pixel de l'écran, contribuant à l'image formée sur la rétine, émette une onde lumineuse selon un axe d'émission passant par le centre de la lentille 20. Ainsi, les angles d'émission assignés à chaque pixel sont ajustés de façon à converger vers le centre de la lentille 20. Cela permet d'augmenter la quantité de lumière formant l'image sur la rétine.

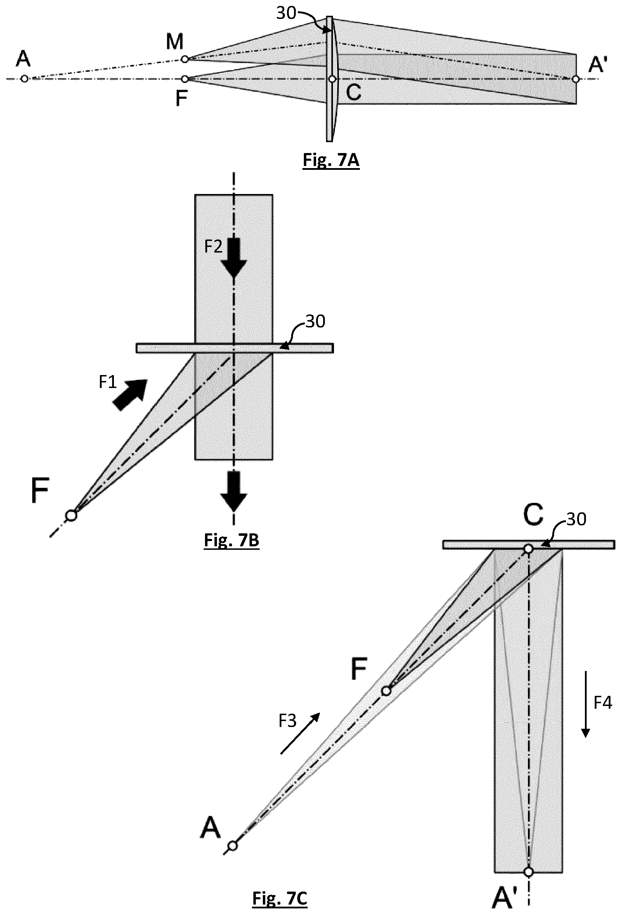

La figure 7A détaille le fonctionnement d'une lentille convergente. Sur la figure 7A, la lentille conjugue le point A' avec le point A. Les points F et M appartiennent au plan focal objet. Les ondes lumineuses émises par les points F et M sont renvoyées à l'infini par la lentille. Le point F correspond au foyer de la lentille. Le point M est décalé par rapport au point F dans le plan focal objet. En sortie de la lentille, les faisceaux passant respectivement par les points F et M sont collimatés, et déviés angulairement l'un par rapport à l'autre.

La figure 7B illustre une phase d'enregistrement d'un hologramme sur le combineur holographique. Une zone élémentaire du matériau holographique, formant le combineur, est exposée, à un faisceau divergent de référence F1, émis à partir d'un point F, et à un faisceau objet collimaté F2, les deux faisceaux étant émis par une même source de lumière. La source de lumière utilisée est de préférence cohérente, par exemple une source laser, émettant dans une bande spectrale d'enregistrement. L'hologramme résultant des interférences entre les faisceaux F1 et F2 est stocké dans le matériau holographique. La figure 7C montre l'utilisation du combineur holographique : sous l'effet d'une exposition à un faisceau lumineux divergent F3, émis depuis le point F, qui correspond au foyer de la lentille, l'hologramme préalablement stocké réfléchit un faisceau lumineux F4 collimaté. Si le faisceau F3 est émis depuis un point A, distant du foyer F, le combineur réfléchit un faisceau convergent vers un point A'.

Dans l'exemple décrit sur les figures 7B et 7C, le combineur holographique forme une lentille holographique réfléchissant la lumière dans la longueur d'onde des faisceaux F1 et F2. Cela permet de former un réflecteur holographique, adapté à des configurations en réflexion décrites sur les figures 8B et 8D. Le combineur holographique ne fonctionne que dans une bande spectrale étroite, qui correspond à la bande spectrale d'enregistrement. En dehors de cette bande spectrale, le combineur holographique transmet la lumière. Le combineur holographique peut être disposé sur un verre d'une lunette ou sur une visière d'un casque de réalité virtuelle.

Les figures 8A et 8B montrent un premier exemple de réalisation, respectivement selon une représentation dépliée et repliée. Les paramètres de conception sont :

- ER (Eye Relief - dégagement oculaire), correspondant à la distance entre le dioptre le plus proche de l'œil, en l'occurrence le combineur 30, et l'œil : 30 mm ;
- distance entre l'écran 10 et la lentille 20 : $z_e$ = 16 mm
- distance focale de la lentille 20 : $f_1$ = 10 mm ;
- distance focale du combineur 30 : $f_2$ = 18 mm ;
- Taille écran : 5 mm x 5 mm ;
- champ d'observation : FOV = 26 °;

La définition des paramètres permet de fixer la distance *DL* entre la lentille 20 et le combineur 30 :

$$DL = \frac{z_e \times f_1}{z_e - f_1} + f_2$$

On trouve une distance DL = 44.667 mm.

Le champ d'observation (*FOV*) est déterminé par la relation suivante :

$$FOV = 2\alpha_{max} = 2 \times \tan^{-1}\left(\frac{d_e}{2 \times f_2 \times z_e} \times (DL - f_2)\right)$$

Où $\alpha_{max}$ est l'angle apparent du pixel de l'écran le plus éloigné de l'axe optique.

On trouve FOV = 26°.

Si on souhaite modifier le plan d'accommodation on peut le faire en modifiant les paramètres optiques du système de manière active. On détermine $Z_{ac}$ la distance d'accommodation, elle est donnée par la formule :

$$Z_{ac} = \frac{[(f_1 - z_e) \times D_L + z_e \times f_1] \times f_2}{z_e \times f_1 + (D_L - f_2) \times (f_1 - z_e)} + ER$$

La distance d'accommodation $Z_{ac}$ peut être variée en modifiant $z_e$ (distance écran-lentille 20) ou en modifiant la distance focale $f_1$, en utilisant une lentille 20 de focale variable.

Pour passer d'une distance d'accommodation de l'infini à $Z_{ac}$ = 2 m il faut déplacer l'écran d'une distance 16 mm à 15.94 mm, ce qui correspond à un déplacement de 60 μm. Un tel déplacement peut être obtenu en utilisant un support de translation, par exemple motorisé, ou piézoélectrique, permettant une translation de l'écran par rapport à la lentille, le long de l'axe optique. On obtient le même effet avec une lentille 20 dont la distance focale varie de 10 mm à 10.022 mm.

Sur la figure 8B, on a représenté une configuration en réflexion, selon laquelle le combineur fait office de réflecteur. Une telle configuration, avec un eye relief important (30 mm), est plus adaptée à un montage sur un casque de réalité mixte. Le réflecteur étant transparent, hormis dans des longueurs d'onde auxquelles sont sensibles les hologrammes, il permet de transmettre une image $I_s$ d'une scène se propageant vers l'œil de l'utilisateur. Le combineur peut aussi être opaque pour adresser les applications de réalité virtuelle. Le combineur forme alors un réflecteur optique qui peut être constitué par un composant holographique tel que décrit plus haut ou par un miroir « free form » dont la courbure permet d'obtenir l'effet de convergence voulu. L'angle θ correspond à un angle de repliement. Dans cet exemple, θ = 32°. Dans ce mode de réalisation, en réflexion, le recours à un combineur holographique est particulièrement avantageux.

Sur les figures 8C et 8D, on a schématisé un deuxième exemple de réalisation, respectivement en transmission et en réflexion, avec les paramètres suivants :

- ER (Eye Relief - dégagement oculaire) : 15 mm ;
- distance entre l'écran 10 et la lentille 20 : $z_e$ = 20 mm
- distance focale de la lentille 20 : f1 = 10 mm ;
- distance focale du combineur 30 : f2 = 10 mm ;
- Taille écran : 5 mm x 5 mm ;
- champ d'observation : FOV = 28°

Pour cette configuration on fixe DL = 30 mm. Pour passer d'une accommodation de l'infini à Zac = 2 m il faut modifier la distance écran-lentille de 20 mm à 19.95 mm.

Cette configuration est plus compacte que celle décrite en lien avec les figures 8A et 8B. Le dégagement oculaire est de 15 mm, ce qui est adapté à une intégration dans un équipement de type lunette. Sur la figure 8D, on a représenté une configuration en réflexion, avec un angle de repliement de θ = 45°.

La configuration schématisée sur la figure 2, et dont des exemples ont été données en lien avec les figures 8A à 8D, peut fonctionner pour tout type d'écran. Le recours à un écran directif est avantageux, car il permet d'augmenter le rendement lumineux du dispositif. Comme précédemment décrit, l'émission de chaque pixel $10_j$ est paramétrée par des caractéristiques angulaires $\gamma_i$ et $\beta_i$. On a précédemment établi qu'il était préférable que l'angle d'émission $\gamma_i$ soit tel que l'axe d'émission de chaque pixel passe par le centre de la lentille 20. L'angle de divergence $\beta_i$ peut être optimisé, de façon à augmenter le rendement lumineux du dispositif.

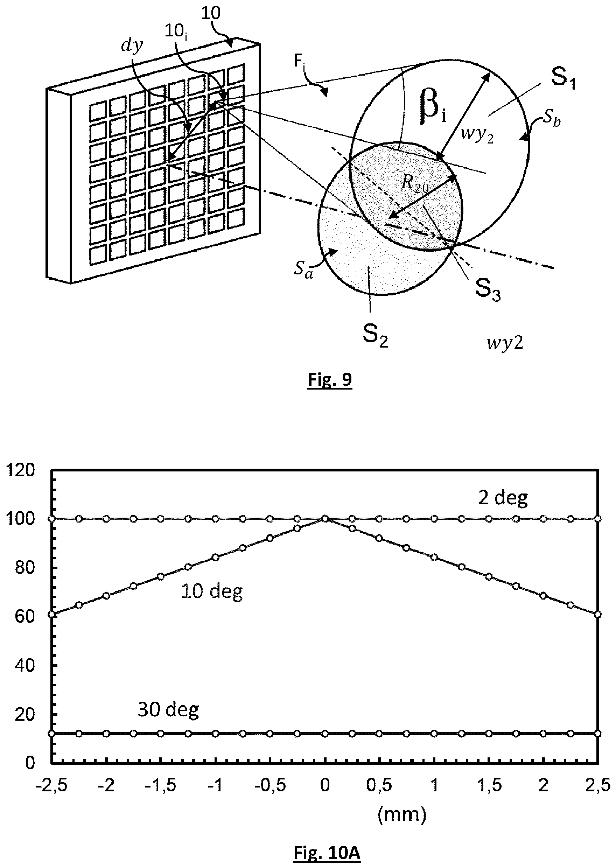

Sur la figure 9, on a représenté un faisceau homogène $F_i$ émis par un pixel $10_i$ dont l'angle d'émission est orienté selon une direction perpendiculaire à la surface de l'écran. Le faisceau se répartit, dans le plan formé par la lentille 20, selon un disque de surface $S_1$ et de rayon $wy_2$ (cf. figure 2). $S_2$ correspond à la surface de la lentille 20, de rayon $R_{20}$. $S_3$ correspond à l'intersection de $S_1$ et de S2. $S_3$ doit être aussi élevé que possible de façon à optimiser la collection, par la lentille 20, du faisceau émis par le pixel. On peut définir un rendement $\rho$, tel que :

$$\rho = \frac{S_3}{S_1} \quad (1)$$

Le rendement $\rho$ peut être calculé de façon géométrique, en posant :

$$d = \frac{wy_2 + dy^2 - R_{20}^2}{2dy} \quad (2)$$

$$d' = dy - d \quad (3)$$

Soient $S_a$ et $S_b$, les parties des surfaces $S_2$ et $S_1$ respectivement délimitées par la ligne en pointillés représentée sur la figure 9.

$$S_a + S_b = S_1 + S_2 - S_3 \quad (4)$$

$$S_a = wy_2{}^2 \times cos^{-1}\left(\frac{d}{wy2}\right) - d\sqrt{wy_2{}^2 - d^2} \quad (5)$$

$$S_b = R_{20} \times cos^{-1}\left(\frac{d'}{R_{20}}\right) - d'\sqrt{R_{20}{}^2 - d'{}^2} \quad (6)$$

$$\rho = \frac{S_3}{\pi wy_2{}^2} \quad (7)$$

et :

$$wy_2 = Z_e \tan(\beta_i) \quad (8)$$

$Z_e$ est la distance entre la lentille 20 et l'écran 10.

On a calculé le rendement $\rho$ selon l'expression (7), en considérant trois valeurs de $\beta_i$ : 2°, 10° ou 30 °. La figure 10A représente la valeur du rendement (axe des ordonnées) en fonction d'une distance des pixels par rapport au centre de l'écran. On observe que pour une divergence de 10° le rendement n'est optimal que pour les pixels au centre de l'écran. Comme l'angle d'émission n'est pas contrôlé, le rendement chute quand les pixels s'éloignent du centre de l'écran.

Lorsque l'angle de divergence est de 2°, le rendement de 100% est obtenu pour les pixels situés autour du centre de l'écran. Cela correspond à une configuration selon laquelle la surface S2, est petite, et contenue dans la surface S1.

Plus l'angle de divergence est réduit, meilleur est le rendement. Cela confirme l'intérêt d'un écran directif, faiblement divergent, dans la mise en œuvre de l'invention. Par faiblement divergent, il est entendu que l'angle de divergence de chaque pixel est inférieur à 20°, et de préférence inférieur à 15° ou 10°. On rappelle que l'angle de divergence est le demi-angle au sommet du cône d'émission du pixel.

Outre le rendement, un autre indicateur de performance est la taille de la eye-box, qui dépend également de l'angle de divergence. En effet, le côté EB de la eye box est tel que :

$$EB = 2wy_5 = 2\frac{f_2(Z_e - f_1)}{f_1}\tan(\beta_i) \quad (9)$$

où $f_1$ et $f_2$ sont les distances focales respectives de la lentille 20 et du combineur 30.

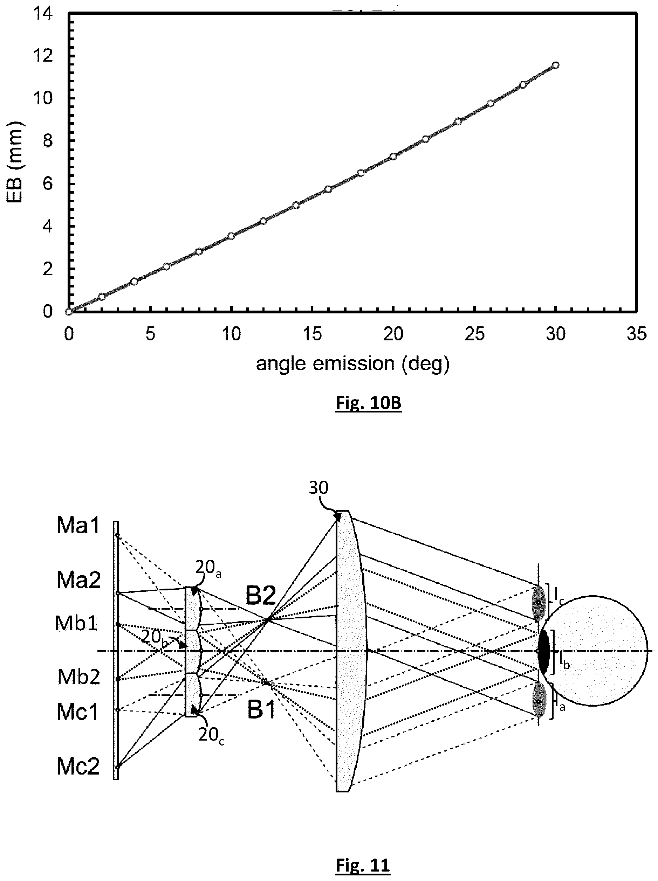

Sur la figure 10B, on a représenté la dimension *EB* d'un côté de la Eye-Box (axe des ordonnées - unité mm) en fonction de l'angle $\beta_i$ (axe des abscisses - unité degré). On observe que plus la divergence est élevée, plus la taille de la Eye-Box augmente, ce qui améliore le confort d'utilisation du dispositif. Lorsque l'angle $\beta_i$ de chaque pixel est égal à 10°, la Eye-Box mesure 4 mm de côté, ce qui est acceptable. Sur la figure 10A, on observe que si la directivité d'émission des pixels n'est pas adaptée , un angle de divergence de 10° amène à une perte de rendement de 40% pour les pixels disposés à la périphérie de l'écran 10. Suivant notre invention, avec un contrôle de la directivité qui cible le centre de la lentille 20, le rendement est voisin de 100% pour l'ensemble des pixels tout en gardant une eye-box raisonnable.

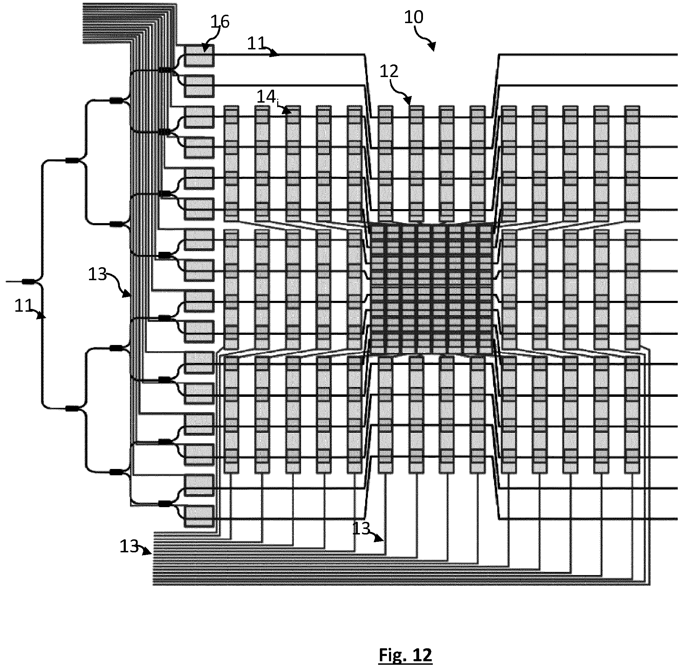

Les figures 11 et 12 illustrent des variantes de réalisation. Sur la figure 11, on a représenté une configuration selon laquelle la lentille 20 est formée par plusieurs lentilles élémentaires convergentes $20_a$, $20_b$ et $20_c$ coplanaires et alignées perpendiculairement à l'axe optique $\Delta_0$. Chaque lentille est optiquement couplée à un groupe de pixels de l'écran, ces pixels étant associés à ladite lentille. Les pixels associés à une lentille ont un axe d'émission convergeant vers le centre de ladite lentille. Sur la figure 11:

- les pixels situés entre les points Ma1 et Ma2 sont associés à la lentille élémentaire $20_a$ : ils forment un premier sous-écran ;

- les pixels situés entre les points Mb1 et Mb2 sont associés à la lentille élémentaire $20_b$ : ils forment un deuxième sous-écran ;
- les pixels situés entre les points Mc1 et Mc2 sont associés à la lentille élémentaire $20_c$ : ils forment un troisième sous-écran ;

Selon cette configuration :

- le pixel placé au point Ma1 est imagé, par la lentille $20_a$, au point B1 ;
- le pixel placé au point Ma2 est imagé, par la lentille $20_a$, au point B2 ;
- le pixel placé au point Mb1 est imagé, par la lentille $20_b$, au point B1 ;
- le pixel placé au point Mb2 est imagé, par la lentille $20_b$, au point B2 ;
- le pixel placé au point Mc1 est imagé, par la lentille $20_c$, au point B1 ;
- le pixel placé au point Mc2 est imagé, par la lentille $20_c$, au point B2 ;

Cette configuration permet de former, au niveau de la pupille, trois images $I_a$, $I_b$, et $I_c$, correspondant respectivement aux pixels Ma1 à Ma2, Mb1 à Mb2, Mc1 à Mc2. L'écran est alors segmenté en trois sous-écrans, chaque sous-écran étant associé à une lentille. Les pixels d'un même sous-écran permettant la formation de trois images. Si les trois groupes de pixels comportent le même contenu, les images $I_a$, $I_b$, et $I_c$ sont identiques. Une telle configuration permet de dupliquer la Eye-Box, de façon à augmenter le débattement spatial de l'œil.

La figure 12 illustre une variante selon laquelle le pas spatial, séparant deux pixels adjacents, est variable. Plus précisément, l'écran est segmenté en une partie centrale, comportant 8 x 8 pixels, entourée par une partie périphérique. Le pas spatial est réduit au niveau d'une partie centrale de l'écran, par rapport au pas spatial séparant les pixels adjacents de la partie périphérique. Cela permet d'améliorer la résolution spatiale de l'écran au niveau de la fovéa, qui est une zone centrale de la rétine dont le rayon angulaire s'étend jusqu'à 3° ou 5°. Au niveau de la fovéa, la résolution spatiale de l'œil est particulièrement élevée. Un tel écran, désigné par le terme écran fovéaté, est adapté à la variation de la résolution spatiale de l'œil.

**Revendications**

1.   Dispositif (1) de projection d'une image sur un œil (O), le dispositif comportant :

- un émetteur de lumière, configuré pour émettre des ondes lumineuses respectivement selon différents axes d'émission ;
- un combineur optique (30), optiquement couplé à l'émetteur de lumière, et configuré pour former, à partir de chaque onde lumineuse émise par l'émetteur de lumière, une onde lumineuse collimatée se propageant vers la pupille (P) de l'œil ;

dans lequel :

- l'émetteur de lumière comporte un écran directif (10), comprenant différents pixels ($10_i$), chaque pixel étant configuré pour émettre une onde lumineuse divergente se propageant autour d'un axe d'émission, les différents pixels émettant respectivement des ondes lumineuses divergentes se propageant respectivement selon un angle de divergence ($\beta_i$), prédéfini, par rapport à leur axe d'émission respectif ;
- le combineur optique est configuré pour recevoir chaque onde lumineuse émise par un pixel et former une onde lumineuse collimatée se propageant vers une position centrale (C3), correspondant au centre de la pupille de l'œil ;

le dispositif comportant une lentille convergente (20) interposée entre l'écran (10) et le combineur optique (30), la lentille convergente s'étendant autour d'un centre (C1), le centre de la lentille formant, avec un centre du combineur (C2), un axe optique ($\Delta_0$) du dispositif, la lentille étant disposée de telle sorte que :

- l'image de l'écran, par la lentille convergente (20), est formée dans un plan focal objet du combineur ;
- l'image du centre de la lentille convergente, par le combineur (30), est formée à la position centrale (C3) ;
- les axes d'émission respectifs de pixels convergent vers le centre de la lentille convergente ;
- de façon que l'onde lumineuse collimatée, résultant du combineur, atteint la position centrale en formant un angle ($\alpha_i$) dépendant de la position du pixel ($10_i$) de l'écran.

**2.** Dispositif selon la revendication 1 dans lequel l'écran comporte un empilement comprenant:

- des guides de lumière (11), chaque guide de lumière étant couplé à une pluralité de réseaux de diffraction (12), répartis le long du guide de lumière, chaque réseau de diffraction étant électriquement modulable, chaque réseau de diffraction (12) étant configuré pour être modulé électriquement de façon à extraire une lumière se propageant dans le guide de lumière ;
- des électrodes (13), chaque électrode étant associée à plusieurs réseaux de diffraction (12) respectivement couplés à différents guides de lumière, chaque électrode étant configurée pour moduler chaque réseau de diffraction auquel elle est associée ;
chaque pixel de l'écran correspondant à une association entre une électrode et un réseau de diffraction couplé à un guide de lumière ;
de façon que sous l'effet d'une illumination par une lumière extraite du guide de lumière, chaque pixel est configuré pour émettre une onde lumineuse divergente, se propageant autour d'un axe d'émission du pixel, en formant un cône d'émission, défini par un angle de divergence autour de l'axe d'émission du pixel.

**3.** Dispositif selon la revendication 2, dans lequel l'écran comporte un film holographique (14), subdivisé en différentes zones élémentaires, chaque zone élémentaire étant associée au réseau de diffraction (12) d'un pixel, et configurée pour émettre l'onde lumineuse divergente, selon l'axe d'émission et l'angle de divergence du pixel, sous l'effet d'une lumière extraite par le réseau de diffraction auquel elle est associée.

**4.** Dispositif selon l'une quelconque des revendications 2 ou 3, dans lequel :

- plusieurs guides de lumière sont reliés à une même source de lumière ;
- un modulateur de lumière s'étend entre la source de lumière et chaque guide de lumière, de façon à moduler une intensité de la lumière, émise par la source de lumière, alimentant chaque guide de lumière.

**5.** Dispositif selon l'une quelconque des revendications 2 à 4, comportant plusieurs sources de lumière, chaque source de lumière étant optiquement reliée à plusieurs guides de lumière.

**6.** Dispositif selon la revendication 2 à 5, dans lequel différentes sources de lumière sont configurées pour émettre une lumière respectivement selon différentes longueurs d'onde.

**7.** Dispositif selon l'une quelconque des revendications 2 à 6, dans lesquels les pixels sont agencés selon :

- des lignes, chaque ligne étant définie par un guide de lumière, le guide de lumière s'étendant le long de différents pixels de la ligne ;
- des colonnes, chaque colonne étant définie par une électrode, l'électrode s'étendant le long de différents pixels le long de la colonne.

**8.** Dispositif selon l'une quelconque des revendications précédentes, comportant :

- plusieurs lentilles convergentes ($20_a$, $20_b$, $20_c$), alignées parallèlement à l'écran directif, chaque lentille s'étendant autour d'un centre et présentant un même plan focal objet ; le dispositif étant tel que
- l'écran est disposé parallèlement à chaque lentille convergente ;
- chaque lentille convergente est associée à des pixels de l'écran directif ;
- l'axe d'émission de chaque pixel associé à la lentille converge vers le centre de la lentille convergente à laquelle il est associé.

**9.** Dispositif selon l'une quelconque des revendications précédentes, dans lequel :

- deux pixels adjacents sont distants d'un pas spatial ;
- l'écran comporte une partie centrale, entourée d'une partie périphérique ;
- le pas spatial entre deux pixels adjacents de la partie centrale est inférieur au pas spatial entre deux pixels adjacents de la partie périphérique.

**10.** Dispositif selon l'une quelconque des revendications précédentes, dans lequel le combineur est un combineur holographique.

**11.** Dispositif selon la revendication 10, dans lequel :

- l'écran émet une lumière selon au moins une bande spectrale d'émission ;
- le combineur holographique est transparent en dehors de la ou de chaque bande spectrale d'émission ;
- le combineur holographique forme une lentille convergente dans la ou chaque bande spectrale d'émission.

**12.** Dispositif selon la revendication 11, dans lequel le combineur holographique forme un réflecteur dans la ou chaque bande spectrale d'émission.

**13.** Dispositif selon l'une quelconque des revendications précédentes, dans lequel la lentille convergente est mobile en translation par rapport à l'écran, le long de l'axe optique.

**14.** Dispositif selon l'une quelconque des revendications précédentes, dans lequel la lentille convergente présente une distance focale variable.

**Patentansprüche**

**1.** Vorrichtung (1) zum Projizieren eines Bildes auf ein Auge (O), die Vorrichtung umfassend:

- einen Lichtemitter, der dazu ausgestaltet ist, Lichtwellen jeweils gemäß verschiedenen Emissionsachsen zu emittieren;
- einen optischen Kombinator (30), der mit dem Lichtemitter optisch gekoppelt ist und dazu ausgestaltet ist, ausgehend von jeder von dem Lichtemitter emittierten Lichtwelle eine kollimierte Lichtwelle zu bilden, die sich zu der Pupille (P) des Auges hin ausbreitet;

wobei:

- der Lichtemitter einen richtenden Schirm (10) umfasst, der verschiedenen Pixel ($10_i$) aufweist, wobei jedes Pixel dazu ausgestaltet ist, eine divergente Lichtwelle zu emittieren, die sich um eine Emissionsachse herum ausbreitet, wobei die verschiedenen Pixel jeweils divergente Lichtwellen emittieren, die sich jeweils gemäß einem vorgegebenen Divergenzwinkel ($\beta_i$) in Bezug auf ihre jeweilige Emissionsachse ausbreiten;
- der optische Kombinator dazu ausgestaltet ist, jede von einem Pixel emittierte Lichtwelle zu empfangen und eine kollimierte Lichtwelle zu bilden, die sich zu einer zentralen Position (C3) hin ausbreitet, die dem Mittelpunkt der Pupille des Auges entspricht;

wobei die Vorrichtung eine konvergente Linse (20) umfasst, die zwischen den Schirm (10) und den optischen Kombinator (30) gesetzt ist, wobei sich die konvergente Linse um einen Mittelpunkt (C1) herum erstreckt, wobei der Mittelpunkt der Linse mit einem Mittelpunkt des Kombinators (C2) eine optische Achse ($\Delta_0$) der Vorrichtung bildet, wobei die Linse so angeordnet ist, dass:

- das Bild des Schirms, durch die konvergente Linse (20), in einer Objektbrennebene des Kombinators gebildet wird;
- das Bild des Mittelpunkts der konvergenten Linse, durch den Kombinator (30), an der zentralen Position (C3) gebildet wird;
- die jeweiligen Emissionsachsen von Pixeln zu dem Mittelpunkt der konvergenten Linse hin konvergieren;
- so das die kollimierte Lichtwelle, die aus dem Kombinator hervorgeht, die zentrale Position unter Bildung eines Winkels ($\alpha_i$) erreicht, der von der Position des Pixels ($10_i$) des Schirms abhängt.

**2.** Vorrichtung nach Anspruch 1, wobei der Bildschirm einen Stapel umfasst, der aufweist:

- Lichtleiter (11), wobei jeder Lichtleiter mit einer Mehrzahl von Beugungsgittern (12) gekoppelt ist, die entlang des Lichtleiters verteilt sind, wobei jedes Beugungsgitter elektrisch modulierbar ist, wobei jedes Beugungsgitter (12) dazu ausgestaltet ist, elektrisch so moduliert zu werden, dass ein Licht ausgekoppelt wird, das sich in dem Lichtleiter ausbreitet;
- Elektroden (13), wobei jede Elektrode mehreren Beugungsgittern (12) zu geordnet ist, die jeweils mit verschiedenen Lichtleitern gekoppelt sind, wobei jede Elektrode dazu ausgestaltet ist, jedes Beugungsgitter, dem sie zugeordnet ist, zu modulieren;

wobei jedes Pixel des Schirms einer Zuordnung zwischen einer Elektrode und einem mit einem Lichtleiter gekoppelten Beugungsgitter entspricht;

so dass unter der Wirkung einer Beleuchtung durch ein aus dem Lichtleiter ausgekoppelten Licht jedes Pixel dazu ausgestaltet ist, eine divergente Lichtwelle zu emittieren, die sich um eine Emissionsachse des Pixels herum unter Bildung eines Emissionskegels ausbreitet, der durch einen Divergenzwinkel um die Emissionsachse des Pixels herum definiert ist.

3. Vorrichtung nach Anspruch 2, wobei der Schirm einen holografischen Film (14) umfasst, der in verschiedene elementare Bereiche unterteilt ist, wobei jeder elementare Bereich dem Beugungsgitter (12) eines Pixels zugeordnet ist und dazu ausgestaltet ist, die divergente Lichtwelle gemäß der Emissionsachse und dem Divergenzwinkel des Pixels unter der Wirkung eines von dem Beugungsgitter, dem er zugeordnet ist, ausgekoppelten Lichts zu emittieren.

4. Vorrichtung nach einem der Ansprüche 2 oder 3, wobei:

   - mehrere Lichtleiter mit einer selben Lichtquelle verbunden sind;
   - ein Lichtmodulator sich zwischen der Lichtquelle und jedem Lichtleiter erstreckt, so dass eine Intensität des von der Lichtquelle emittierten Lichts, das jedem Lichtleiter zugeführt wird, moduliert wird.

5. Vorrichtung nach einem der Ansprüche 2 bis 4, die mehrere Lichtquellen umfasst, wobei jede Lichtquelle mit mehreren Lichtleitern optisch verbunden ist.

6. Vorrichtung nach Anspruch 2 bis 5, wobei verschiedene Lichtquellen dazu ausgestaltet sind, ein Licht jeweils gemäß verschiedenen Wellenlängen zu emittieren.

7. Vorrichtung nach einem der Ansprüche 2 bis 6, wobei die Pixel angeordnet sind in:

   - Zeilen, wobei jede Zeile durch einen Lichtleiter definiert wird, wobei sich der Lichtleiter entlang von verschiedenen Pixeln der Zeile erstreckt;
   - Spalten, wobei jede Spalte durch eine Elektrode definiert wird, wobei sich die Elektrode entlang von verschiedenen Pixeln entlang der Spalte erstreckt.

8. Vorrichtung nach einem der vorhergehenden Ansprüche, umfassend:

   - mehrere konvergente Linsen ($20_a$, $20_b$, $20_c$) die parallel zu dem richtenden Schirm aneinandergereiht sind, wobei sich jede Linse um einen Mittelpunkt herum erstreckt und eine selbe Objektbrennebene aufweist;
   wobei die Vorrichtung derart ist, dass
   - der Schirm parallel zu jeder konvergenten Linse angeordnet ist;
   - jede konvergente Linse Pixeln des richtenden Schirms zugeordnet ist;
   - die Emissionsachse jedes der Linse zugeordneten Pixels zu dem Mittelpunkt der konvergenten Linse hin konvergiert, der es zugeordnet ist.

9. Vorrichtung nach einem der vorhergehenden Ansprüche, wobei:

   - zwei benachbarte Pixel um eine räumliche Schrittweite beabstandet sind;
   - der Schirm einen Mittelteil umfasst, der von einem Randteil umgeben ist;
   - die räumliche Schrittweite zwischen zwei benachbarten Pixeln des Mittelteils kleiner ist als die räumliche Schrittweite zwischen zwei benachbarten Pixeln des Randteils.

10. Vorrichtung nach einem der vorhergehenden Ansprüche, wobei der Kombinator ein holografischer Kombinator ist.

11. Vorrichtung nach Anspruch 10, wobei:

   - der Schirm ein Licht gemäß mindestens einem Emissionsspektralband emittiert;
   - der holografische Kombinator außerhalb des oder jedes Emissionsspektralbandes transparent ist;
   - der holografische Kombinator eine konvergente Linse in dem oder jedem Emissionsspektralband bildet.

12. Vorrichtung nach Anspruch 11, wobei der holografische Kombinator einen Reflektor in dem oder jedem Emissionsspektralband bildet.

**13.** Vorrichtung nach einem der vorhergehenden Ansprüche, wobei die konvergente Linse in Bezug auf den Schirm entlang der optischen Achse translatorisch beweglich ist.

**14.** Vorrichtung nach einem der vorhergehenden Ansprüche, wobei die konvergente Linse eine variable Brennweite aufweist.

**Claims**

**1.** A device (1) for projecting an image onto an eye (O), the device comprising:

- a light emitter, configured to emit light waves along various respective emission axes;
- an optical combiner (30), optically coupled to the light emitter, and configured to form, from each light wave emitted by the light emitter, a collimated light wave that propagates towards a pupil (P) of the eye;

wherein:

- the light emitter comprises a directional screen (10), comprising various pixels ($10_i$), each pixel being configured to emit a divergent light wave that propagates around an emission axis, the various pixels emitting respective divergent light waves propagating at a predetermined divergence angle ($\beta_i$) relative to their respective emission axis;
- the optical combiner is configured to receive each light wave emitted by a pixel and to form a collimated light wave that propagates towards a central position (C3) corresponding to the centre of the pupil of the eye ;

the device comprising a convergent lens (20) interposed between the screen (10) and the optical combiner (30), the convergent lens (20) extending around a centre, the centre of the lens forming, with a centre of the combiner (C2), an optical axis ($\Delta_0$) of the device, the lens being arranged so that

- the image of the screen, as generated by the convergent lens (20), is formed in an object focal plane of the combiner;
- the image of the centre of the convergent lens, as generated by the combiner (30), is formed at the central position (C3);
- the respective emission axes of pixels converge to the centre of the convergent lens.
- so that the collimated light wave, resulting from the combiner, reaches the central position at an angle ($\alpha_i$) dependent on the position of the pixel ($10_i$) of the screen;

**2.** The device according to Claim 1, wherein the screen comprises a stack comprising:

- light guides (11), each light guide being coupled to a plurality of diffraction gratings (12), which are distributed over the length of the light guide, each diffraction grating being electrically modulatable, each diffraction grating being configured to be electrically modulated so as to extract light propagating through the light guide;
- electrodes (13), each electrode being associated with a plurality of diffraction gratings (12) coupled to various light guides, respectively, each electrode being configured to modulate each diffraction grating with which it is associated;
each pixel of the screen corresponding to an association between an electrode and a diffraction grating coupled to a light guide;
so that when illuminated by light extracted from the light guide, each pixel is configured to emit a divergent light wave that propagates around an emission axis of the pixel, thereby forming an emission cone, defined by a divergence angle around the emission axis of the pixel.

**3.** The device according to Claim 2, wherein the screen comprises a holographic film (14), which is subdivided into various elementary zones, each elementary zone being associated with the diffraction grating (12) of one pixel, and configured to emit the divergent light wave, along the emission axis and at the divergence angle of the pixel, under the effect of light extracted by the diffraction grating with which it is associated.

**4.** The device according to any one of Claims 2 or 3, wherein:

- a plurality of light guides are connected to the same light source;

- a light modulator lies between the light source and each light guide, so as to modulate an intensity of the light emitted by the light source and fed to each light guide.

5. The device according to any one of Claims 2 to 4, comprising a plurality of light sources, each light source being optically connected to a plurality of light guides.

6. The device according to any one of Claims 2 to 5, wherein various light sources are configured to emit light at various respective wavelengths.

7. The device according to any one of Claims 2 to 6, wherein the pixels are arranged in:

   - rows, each row being defined by one light guide, the light guide extending over the length of various pixels in the row;
   - columns, each column being defined by one electrode, the electrode extending over the length of various pixels over the length of the column.

8. The device according to any one of the preceding Claims, comprising:

   - a plurality of convergent lenses ($20_a$, $20_b$, $20_c$) aligned parallel to the directional screen, each convergent lens extending around a centre and having the same object focal plane;
   the device being such that
   - the screen is placed parallel to each convergent lens;
   - each convergent lens is associated with pixels of the directional screen;
   - the emission axis of each pixel associated with the lens converges to the centre of the convergent lens with which said pixels is associated.

9. The device according to any one of the preceding Claims, wherein:

   - two adjacent pixels are separated by a spatial pitch;
   - the screen comprises a central part, encircled by a peripheral part;
   - the spatial pitch between two adjacent pixels of the central part is smaller than the spatial pitch between two adjacent pixels of the peripheral part.

10. The device according to any one of the preceding Claims, wherein the combiner is a holographic combiner.

11. The device according to Claim 10, wherein:

    - the screen emits light in at least one emission spectral band;
    - the holographic combiner is transparent outside of the or each emission spectral band;
    - the holographic combiner forms a convergent lens in the or each emission spectral band.

12. The device according to Claim 11, wherein the holographic combiner forms a reflector in the or each emission spectral band.

13. The device according to any one of the preceding Claims, wherein the convergent lens is movable translationally with respect to the screen, along the optical axis.

14. The device according to any one of the preceding Claims, wherein the convergent lens has a variable focal length.

**Fig. 1**

**Fig. 2**

**Fig. 3A**

**Fig. 3B**

**Fig. 4**

**Fig. 5A**

**Fig. 5B**

**Fig. 5C**

G1R
G1B
G1V

15

$11_{in1}$
$11_{in2}$

**Fig. 5D**

15

Al

Al

**Fig. 6A**

**Fig. 6B**

**Fig. 6C**

**Fig. 6D**

**Fig. 6E**

**Fig. 6F**

**Fig. 7A**

**Fig. 7B**

**Fig. 7C**

Fig. 8A

Fig. 8B

**Fig. 8C**

**Fig. 8D**

**Fig. 9**

**Fig. 10A**

Fig. 10B

Fig. 11

**Fig. 12**

## RÉFÉRENCES CITÉES DANS LA DESCRIPTION

**Documents brevets cités dans la description**

- US 9632317 B
- US 10254547 B
- US 20190285897 A
- US 20180299680 A
- US 20060228073 A

**Littérature non-brevet citée dans la description**

- **MARTINEZ**. See-trough holographic retinal projection display concept. *Optica*, October 2018, vol. 5 (10)